Europäisches Patentamt

European Patent Office

Office européen des brevets

(19)

(11) Veröffentlichungsnummer: **0 232 279**
**B1**

## (12) EUROPÄISCHE PATENTSCHRIFT

(45) Veröffentlichungstag der Patentschrifft:
28.02.90

(21) Anmeldenummer: 86900109.9

(22) Anmeldetag: 05.12.85

(86) Internationale Anmeldenummer:
PCT/EP 85/00677

(87) Internationale Veröffentlichungsnummer:
WO 86/03858 (03.07.86 Gazette 86/14)

(51) Int. Cl. ⁵: G 05 G 3/00

(54) SCHALTEINRICHTUNG.

(30) Priorität: 22.12.84 PCT/EP84/00429

(43) Veröffentlichungstag der Anmeldung:
19.08.87 Patentblatt 87/34

(45) Bekanntmachung des Hinweises auf die Patenterteilung:
28.02.90 Patentblatt 90/09

(84) Bennante Vertragsstaaten:
DE GB SE

(56) Entgegenhaltungen:
DE-A-2 917 774
FR-A-1 412 745
FR-A-2 254 060
US-A-1 328 062
US-A-2 489 735
US-A-44 767 38

(73) Patentinhaber: ZAHNRADFABRIK FRIEDRICHSHAFEN
AKTIENGESELLSCHAFT
Löwentaler Strasse 100 Postfach 2520
D-7990 Friedrichshafen 1 (DE)

(72) Erfinder: HEINZELMANN, Karl-Fritz
Finkenstrasse 11
D-7996 Meckenbeuren (DE)

(74) Vertreter: Raue, Reimund
Zahnradfabrik Friedrichshafen AG Löwentaler Strasse
100 Postfach 2520
D-7990 Friedrichshafen 1 (DE)

**Beschreibung**

Die Erfindung betrifft eine Schalteinrichtung nach dem Oberbegriff von Anspruch 1.

Wechselgetriebe werden infolge unterschiedlichen Einsatzes für mehrere Übersetzungen entwickelt, z. B. in einer sogenannten Berggang-Ausführung, in der der höchste Gang eine Übersetzung von 1,0 hat und wahlweise auch in einer Schnellgang-Ausführung mit einem Overdrive und einer Übersetzung, z. B. 0,79, als höchsten Gang. Zur Realisierung solcher Varianten müssen die Schalteinrichtungen angepaßt werden. In dem einen Fall muß die Schiebemuffe für den direkten Durchtrieb im Getriebe bei einer Übersetzung von 1 in Fahrtrichtung, also nach links, und im anderen Fall entgegengesetzt verstellt werden. Das Schaltbild für den Fahrer soll aber dabei nicht verändert werden, so daß eine Umlenkung in der Schalteinrichtung zweckmäßigerweise im Getriebe nötig wird.

Es ist bekannt, die in Frage kommende Schaltschwinge nicht wie die anderen Schaltschwingen zwischen Gleitstein und Eingriff in die Schaltschiene im Gehäuse zu lagern, so daß bei einer Betätigung eine Umkehr der Bewegungsrichtung der Schiebemuffe erfolgt, sondern die Lagerung der Schaltschwinge an einem Ende vorzunehmen und den Gleitstein zwischen dem Eingriff in der Schaltschiene und dieser Lagerung anzuordnen. Damit bleibt trotz Umkehr der Schiebemuffenbewegung die Schaltrichtung für den Fahrer, also am Handschalthebel, gleich. Die Verwirklichung dieser relativ einfachen Veränderung ist jedoch nicht immer möglich, weil damit der erforderliche Schaltweg für die Schiebemuffe nicht erzielt wird und die Lagerung der Schaltschwinge außerhalb vom Getriebegehäuse liegen müßte.

Deshalb ist es schon bekannt, eine Schaltschwinge in dieser Ausführung wohl zu verwenden und zusätzlich den Schaltweg im Bereich der Schaltschienen zu vergrößern.

Neben der Anordnung von zwei neuen Gelenkschrauben und einer neuen wesentlich größeren Schaltschwinge sind die Einrichtungen im Bereich der Schaltschiene sehr aufwendig in der Herstellung und bei der Montage.

Es ist deshalb Aufgabe der Erfindung eine Schalteinrichtung nach dem Oberbegriff von Anspruch 1 so zu verbessern, daß als Variante die Umkehr der Bewegungsrichtung von der Schiebemuffe mit einfachen Mitteln und damit kostengünstig erreicht wird.

Diese Aufgabe wird mit den kennzeichnenden Merkmalen von Anspruch 1 erfüllt.

Durch die Anordnung eines einfachen Umlenkhebels, der sogar als Stanzteil hergestellt werden kann, zwischen Schaltschiene und einer im Prinzip und in der Größe gleichen Schaltschwinge wird die gewollte Richtungsänderung erzielt, wobei auch die Lagerungen der Schaltschwinge im Getriebegehäuse unverändert bleiben können.

In den Ansprüchen 2 bis 5 wird die Erfindung besonders vorteilhaft ausgestaltet.

In einem bevorzugten Ausführungsbeispiel ist lediglich neben dem Umlenkhebel noch eine Gelenkschraube im Gehäuse und ein Mitnahmebolzen zwischen Schaltschwinge und Umlenkhebel nötig, um neben der Umkehr der Bewegungsrichtung auch einen ausreichenden Schaltweg für die Schiebemuffe zu erzielen. Der einfache Mitnahmebolzen an einem der Teile kann leicht hergestellt oder in einfacher Weise sogar spanlos an z. B. den Umlenkhebel angeformt werden. Erfolgt die Lagerung des Umlenkhebels an der Gelenkschraube in einer Gabel, die am Umlenkhebel angeformt ist, so ist diese nicht nur sehr einfach, sondern auch leichtgängig.

Aus der DE-PS-2 935 590 ist eine Schalteinrichtung bekannt, in der zur Umkehr der Schalthebelbewegung bei einem Gang ein Umlenkhebel angeordnet ist, damit mit einer Schaltstange in jeder Richtung je ein Gang geschaltet werden kann, obwohl diese Gänge im Schaltbild in der gleichen Richtung angeordnet sind. In dieser Schalteinrichtung werden zum Schalten im Prinzip nur Schaltgabeln verschoben, Schaltschwingen sind keine angeordnet, und der Umlenkhebel ist, wie allgemein bekannt, in der Mitte drehbar gelagert.

Aus der DE-A-2 917 774 ist eine Schalteinrichtung für ein Rückwärtsgangschieberad bekannt, bei der über die Betätigung einer Schaltstange (26) ein auf dieser befestigter Schaltkopf (21) und über einen Schaltarm (22) auf einer weiteren Schaltstange (24) gelagerte Schaltgabel (23) zur Verschiebung des Zwischenrades (12) in die gleiche Richtung verstellt wird. Zu diesem Zweck ist der Schaltarm an einem Ende über einen Stift (29) am Gehäuse (14) gelagert. Über den Abstand des Schaltarmes (22) und des Schaltfingers (23) vom Drehpunkt des Schaltarmes (22) ergibt sich der Verschiebeweg des Schaltfingers (23) und damit des Zwischenrades (12). Ein Hinweis für die Anordnung eines Umkehrhebels ist dieser Schrift nicht zu entnehmen.

Weitere Einzelheiten der Erfindung werden anhand von Ausführungsbeispielen und von Zeichnungen erläutert, wobei die Einzelheiten der Zeichnung Gegenstand der Erfindung sind.

Es zeigen:

Fig. 1  einen Teillängsschnitt durch das Getriebe im Bereich der Schaltkupplung für den höchsten Gang,

Fig. 2  einen Teilquerschnitt durch das Getriebe im Bereich der Schaltschwinge des Umlenkhebels und der Schaltschiene,

Fig. 3  einen Schnitt II - II nach Fig. 2,

Fig. 4  einen Ausschnitt nach Fig. 2 mit einem angeformten Mitnahmebolzen.

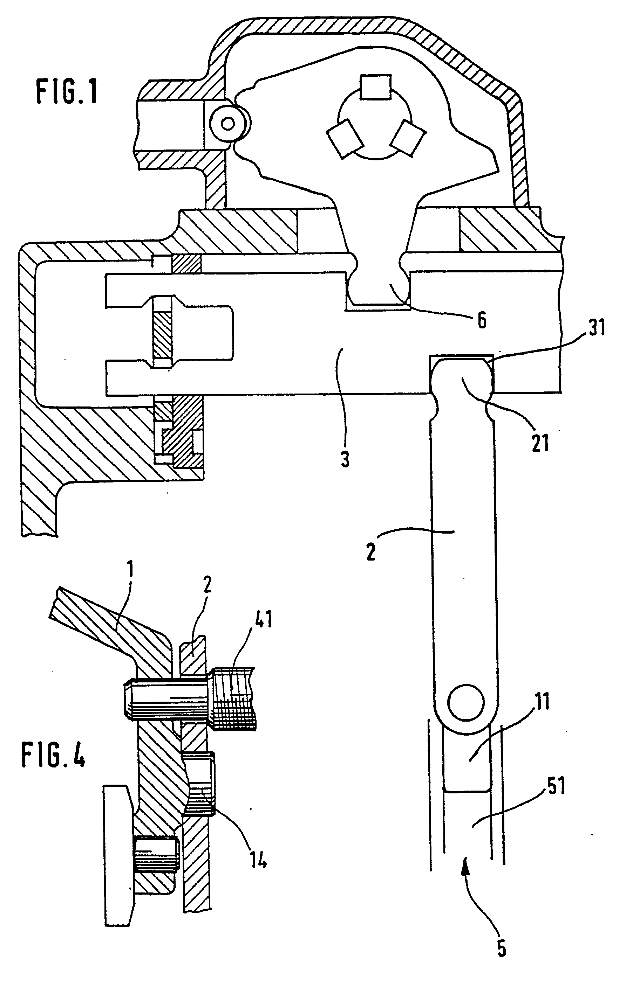

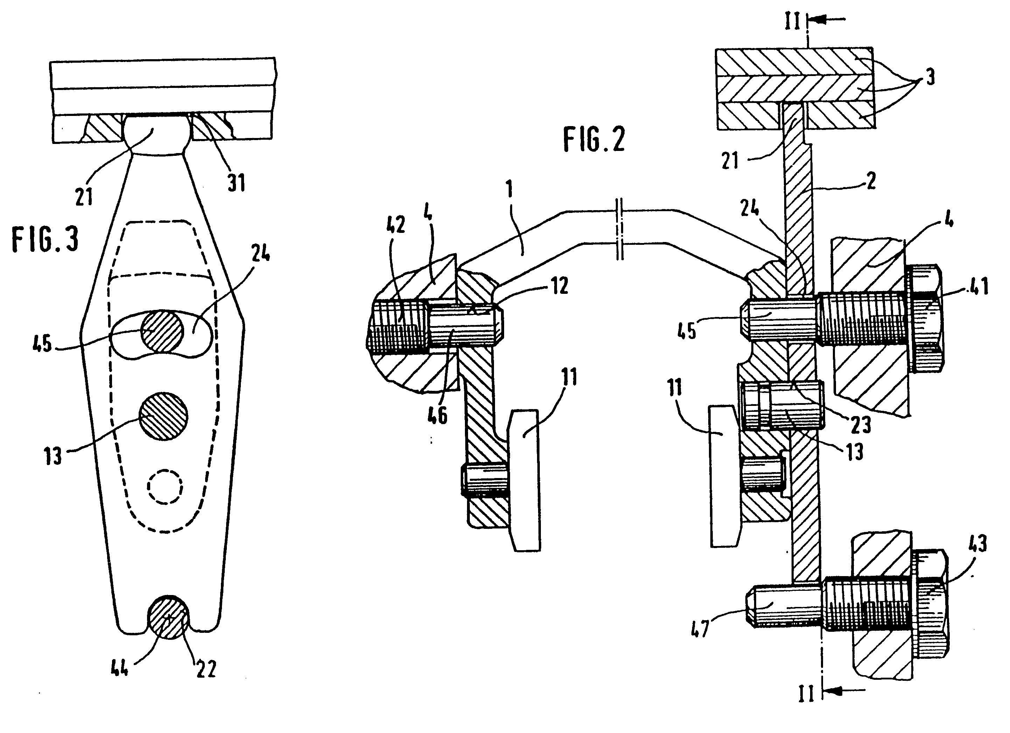

In Fig. 1 ist die Schaltkupplung 5 für die beiden höchsten Gänge im z. B. 4gängigen Wechselgetriebe dargestellt, wobei in der Berggang-Ausführung - höchster Gang 1 : 1 - die Schiebemuffe 51 in Fahrtrichtung, also nach links, für einen direkten Durchtrieb verstellt werden muß, während in

der Schnellgang-Ausführung die Verstellung im höchsten Gang entgegengesetzt notwendig ist und die vorgesehene Untersetzung indirekt, also über die Vorgelegewelle, erfolgt. Die entgegengesetzte Bewegung der Schiebemuffe 51, in die die Gleitsteine 11 eingreifen, wird wie die Fig. 2 und 3 zeigen, über einen Umlenkhebel 2 erreicht, der funktionsmäßig zwischen der Schaltschiene 3 und der Schaltschwinge 1 und konstruktiv zwischen dieser und dem Getriebegehäuse 4 angeordnet ist.

Während bei einer Betätigung einer Schaltschiene 3 z. B. nach rechts infolge des in bekannter Weise direkten Eingriffes der Schaltschwinge 1 in die Schaltschiene 3 und der Anordnung der Gelenkschrauben 41, 42 zwischen diesem Eingriff und dem Gleitstein 11 die Schiebemuffe 51 in die entgegengesetzte Richtung verschoben wird, bewirkt der Umlenkhebel 2 eine Bewegung in die gleiche Richtung.

Beim Verschieben der den beiden höchsten Gängen zugeordneten Schaltschiene 3 z. B. nach links wird durch die Aussparung 31 in der Schaltschiene 3 der Kopf 21 des Umlenkhebels 2 gleichfalls nach links bewegt und der Umlenkhebel 2 um den Drehpunkt 44 infolge der im Getriebegehäuse 4 angeordneten Gelenkschraube 43 nach links verschwenkt. Die Lagerung des Umlenkhebels 2 auf einem Zapfen 47 der Gelenkschraube 43 erfolgt dabei über eine Lagergabel 22. Infolge des z. B. in der Schaltschwinge 1 angeordneten und in eine Bohrung 23 des Umlenkhebels 2 eingreifenden Mitnahmebolzens 13 wird die Schaltschwinge in die beiden gleichfalls im Getriebegehäuse 4 befestigten Gelenkschrauben 41, 42 verschwenkt, so daß die Gleitsteine 11 die Schiebemuffe 51 in die gleiche Richtung verstellen.

Die Verschwenkung des Umlenkhebels 2 im Bereich der Gelenkschraube 41 für die Schaltschwinge 1 wird durch eine geeignete Öffnung 24 im Umlenkhebel 2 ermöglicht, wobei diese auch die Führung des Umlenkhebels 2 in radialer Richtung bewirkt.

Nach Fig. 4 kann der Mitnahmebolzen 13 auch als Zapfen 14 an die Schaltschwinge 1 bzw. an den Umlenkhebel 2 angeformt sein. Besonders bei der Anordnung am Umlenkhebel ist eine spanlose Anformung ohne Nachbearbeitung möglich.

**Bezugszeichen**

| 1  | Schaltschwinge |
| 11 | Gleitstein |
| 12 | Bohrung für Gelenkschraube |
| 13 | Mitnahmebolzen |
| 14 | Zapfen |
| 2  | Umlenkhebel |
| 21 | Umlenkhebelkopf |
| 22 | Lagergabel |
| 23 | Bohrung |
| 24 | Öffnung |
| 3  | Schaltschiene |
| 31 | Aussparung |
| 4  | Getriebegehäuse |
| 41 | Gelenkschraube |
| 42 | Gelenkschraube |
| 43 | Gelenkschraube |
| 44 | Drehpunkt |
| 45 | Zapfen |
| 46 | Zapfen |
| 47 | Zapfen |
| 5  | Schaltkupplung |
| 51 | Schiebemuffe |
| 6  | Schaltfinger |

**Patentansprüche**

1. Schalteinrichtung für Wechselgetriebe mit im oder am Getriebe angeordneten Schaltfingern (6), die von einem Handschalthebel aus betätigt werden und in Schaltschienen (3) eingreifen und diese begrenzt verschieben und mit Schaltschwingen (1), die von diesen Schaltschienen (3) geschwenkt werden und über Gleitsteine (11) Schiebemuffen (51) von Schaltkupplungen (5) betätigen, *dadurch gekennzeichnet*, daß funktionsmäßig zwischen einer Schaltschwinge (1) und Schaltschiene (3) und konstruktiv zwischen der Schaltschwinge (1) und dem Getriebegehäuse (4) ein Umlenkhebel (2) angeordnet ist, der die Betätigungsrichtung der Schaltkupplung (5) so umkehrt, daß die Schaltschiene (3) und die Schiebemuffe (51) in die gleiche Richtung bewegt werden.

2. Schalteinrichtung nach Anspruch 1, *dadurch gekennzeichnet*, daß der Umlenkhebel (2) drehbar mit der Schaltschwinge (1) verbunden und an einem Ende (22) am Getriebegehäuse (4, Gelenkschraube 43) schwenkbar gelagert ist und mit dem anderen Ende (Kopf 21) in die Aussparung (31) der zugeordneten Schaltschiene (3) eingreift und eine Öffnung (24) für die Gelenkschraube (41) aufweist, auf der die Schaltschwinge (1) am Gehäuse (4) gelagert ist und die so bemessen ist, daß beim Betätigen des Umlenkhebels (2) durch die Schaltschiene (3) ein ungehindertes Ausschwenken des Umlenkhebels (2) gewährleistet ist.

3. Schalteinrichtung nach Anspruch 2, *dadurch gekennzeichnet*, daß die drehbare Verbindung zwischen Umlenkhebel (2) und Schaltschwinge (1) über einen in einem der Teile festsitzenden Lagerbolzen (13) erfolgt.

4. Schalteinrichtung nach Anspruch 2, *dadurch gekennzeichnet*, daß die drehbare Verbindung zwischen Umlenkhebel (2) und Schaltschwinge (1) über einen an eines der Teile angeformten Zapfen (14) erfolgt.

5. Schalteinrichtung nach einem der vorgenannten Ansprüche, *dadurch gekennzeichnet*, daß die Lagerung des Umlenkhebels (2) am Getriebegehäuse (4) über eine im Getriebegehäuse befestigte Gelenkschraube (43) erfolgt und der Umlenkhebel (2) an der Lagerstelle gabelartig ausgebildet ist.

## Revendications

1. Dispositif de changement de vitesse pour boîte de vitesses avec des doigts de passage de vitesses (6) dans ou sur la boîte, actionnés par un levier de commande manuel et engrénant dans des tiges de commande (3), les décalant légèrement, et prenant prise dans les coulisses de changement de vitesse (1) qui sont inclineés par ces mêmes tiges de commande (3), les coulisses de changement de vitesse étant pourvues de coulisseaux (11) et de manchons coulissants (51) qui font partie des embrayages (5), *caractérisée* en ce qu'un levier d'inversion (2) est disposé au niveau du fonctionnement entre une coulisse de changement de vitesse (1) et une tige de commande (3), et entre une coulisse de changement de vitesse (1) et le carter de la boîte (4) au niveau de la construction, en sorte que ce levier inverse le sens de fonctionnement de l'embrayage (5) de façon à ce que la tige de commande (3) et le manchon coulissant (51) soient actionnés dans le même sens.

2. Dispositif de changement de vitesse selon revendication 1, *caractérisé* en ce que le levier d'inversion (2) pivotable est relié à la coulisse de changement de vitesse (1) et en ce que une de ses extrémités (22) est logée de façon inclinable sur le carter de la boîte (4, vis d'articulation 43), et en ce que l'autre extrémité (tête 21) vient engréner dans la cavité (31) de la tige de commande (3), présentant une ouverture (24) pour la vis d'articulation (41) sur laquelle la coulisse de changement de vitesse (1) du carter (4) est logée ayant des dimensions garantissant le libre pivotement du levier d'inversion (2) lors de la manoeuvre du levier d'inversion (2) par la tige de commande (3).

3. Dispositif de commande selon revendication 2, *caractérisé* en ce que le raccord pivotant entre le levier d'inversion (2) et la coulisse de changement de vitesses (1) s'effectue par l'intermédiaire d'un boulon de palier (13) fixé dans l'une des pièces.

4. Dispositif de changement de vitesse selon revendication 2, *caractérisé* en ce que le raccord pivotable entre le levier d'inversion (2) et la coulisse de changement de vitesse (1) s'effectue par l'intermédiaire d'un embout (14) qui a pris la forme d'une des pièces.

5. Dispositif de changement de vitesse selon une des revendications précédentes, *caractérisé* en ce que le logement du levier d'inversion (2) sur le carter de la boîte (4) s'effectue par l'intermédiaire d'une vis d'articulation (43) fixée dans le carter, et en ce que le levier d'inversion (2) a la forme d'une fourchette au niveau du point d'appui.

## Claims

1. Shifting device for transmission gear comprising driving dogs (6) arranged in or at the gearshifting mechanism, which are actuated by a manual lever and engage with control rods (3) and make these slide on a limited path, and having link rods (1) which are swivelled by these control rods (3), and which actuate sliding sleeves (51) of clutches (5) via slide rings (11), characterised in that a return lever (2) is arranged functionally between a link rod (1) and control rod (3) and constructively between the link rod (1) and the gear housing (4), said return lever (2) reversing the operating device of the clutch (5) in such a way, that the control rod (3) and the sliding sleeve (51) are moved in the same direction.

2. Shifting device according to claim 1, characterised in that the return lever (2) is pivotally connected with the link rod (1) and is pivotally supported at the gear housing (4, swing bolt 43) at one end, and engages in the recess (31) of the associated control rod (3) with the other end (head 21) and comprises an opening (24) for the swing bolt (41), on which the link rod (1) is supported at the housing (4), and which is proportioned in such a way, that, during operation of the return lever (2) by the control rod (3), an unlimited swinging out of the return lever (2) is guaranteed.

3. Shifting device according to claim 2, characterised in that the pivotal connection between the return lever (2) and the link rod (1) is effected via a bearing bolt (13) mounted in one of the parts.

4. Shifting device according to claim 2, characterised in that the pivotal connection between the return lever (2) and the link rod (1) is effected via a pin (14) moulded onto one of the parts.

5. Shifting device according to one of the preceding claims, characterised in that the mounting of the return lever (2) at the gear housing (4) is effected via a swing bolt (43) mounted in the gear housing and that the return lever (2) has a bifurcate form at the mounting point.

FIG.1

FIG.4

FIG.3

FIG.2

EP 0 232 279 B1